# EUROPEAN PATENT APPLICATION

(11) **EP 2 810 966 A1**
(43) Date of publication of application: **10.12.2014**
(21) Application number: 13743181.3
(22) Date of filing: 29.01.2013
(51) Int. Cl.: C08F 290/04, C09K 3/18

(54) **FLUORINE-CONTAINING COPOLYMER AND METHOD FOR PRODUCING SAME, AND WATER REPELLENT/OIL REPELLENT AGENT COMPOSITION**

(30) Priority: 31.01.2012 JP 2012018469
(71) Applicant: Asahi Glass Company, Limited, Tokyo 100-8405 (JP)
(72) Inventor: SASAKI, Miyako, Tokyo 100-8405 (JP); HOSHINO, Taiki, Tokyo 100-8405 (JP); OTOZAWA, Nobuyuki, Tokyo 100-8405 (JP)
(74) Representative: Müller-Boré & Partner Patentanwälte PartG mbB
(86) International application number: PCT/JP2013/051931
(87) International publication number: WO 2013/115196

(57) **Abstract**

To provide a fluorinated copolymer and a water/oil repellent composition having adequate water/oil repellency, excellent washing durability and low environmental impact. A fluorinated copolymer comprising units (A) derived from a macromonomer (a) which has, on average, at least two units (X) derived from 2-perfluorohexylethyl (meta)acrylate or the like, units (B) derived from a monomer (b) which has no fluoroalkyl group and no cross-linkable functional group and of which the glass transition temperature, when formed into a homopolymer, is from 50 to 150°C, and units (C) derived from a monomer (c) which has a cross-linkable functional group and no fluoroalkyl group, and a water/oil repellent composition containing such a fluorinated copolymer.

## Description

### TECHNICAL FIELD

The present invention relates to a fluorinated copolymer and a process for its production, and a water/oil repellent composition containing such a fluorinated copolymer.

### BACKGROUND ART

A fluorinated polymer is employed as a surface treatment agent such as a water/oil repellent. By applying such a surface treatment agent on the surface of an inorganic substrate (such as metal or glass) or a resin substrate (such as polycarbonate) to form a coating film, an article having water/oil repellency is obtainable. As the fluorinated polymer, a fluorinated polymer having a fluoroalkyl group (hereinafter referred to as an "R^{f} group") with at least 8 carbon atoms, is known. However, it is worried that a fluorinated polymer having an R^{f} group with at least 7 carbon atoms has a high environmental impact. Therefore, it is desired to use a fluorinated polymer having an R^{f} group with at most 6 carbon atoms and no R^{f} group with at least 7 carbon atoms.

As a fluorinated polymer having an R^{f} group with at most 6 carbon atoms, a fluorinated copolymer is, for example, known which comprises units derived from a monomer having a perfluoroalkyl group (hereinafter referred to as an "R^{F} group") with at most 6 carbon atoms and units derived from a (meth)acrylate having an alkyl group with at least 15 carbon atoms (Patent Document 1).

Further, as a fluorinated polymer having a hydrophilic non-fluorinated moiety and a fluorinated moiety to be used as a stain-removing agent, a fluorinated copolymer is known which comprises units derived from a fluorinated macromonomer which has an R^{f} group with less than 8 carbon atoms and units derived from a polyalkylene glycol (meth)acrylate (Patent Document 2).

### PRIOR ART DOCUMENTS

### PATENT DOCUMENTS

Patent Document 1: WO2002/083809
Patent Document 2: JP-A-2008-189826

### DISCLOSURE OF INVENTION

### TECHNICAL PROBLEM

However, the article treated with the water/oil repellent composition employing the fluorinated copolymer as disclosed in Patent Document 1 is inadequate in water/oil repellency after being dried without being forcibly heated after washing (hereinafter referred to as "washing durability").

Whereas, the fluorinated copolymer as disclosed in Patent Document 2 has many units derived from a polyalkylene glycol (meth)acrylate which has hydrophilicity, whereby it is difficult to obtain adequate water repellency.

It is an object of the present invention to provide a fluorinated copolymer whereby it is possible to obtain adequate water/oil repellency and excellent washing durability, and a process for its production, as well as a water/oil repellent composition containing such a fluorinated copolymer, which has low environmental impact.

### SOLUTION TO PROBLEM

In order to solve the above problem, the present invention has adopted the following constructions.
[1] A fluorinated copolymer comprising
   units (A) derived from a macromonomer (a) which has, on average, at least two units (X) derived from a monomer (x) represented by the following formula (1),
   units (B) derived from a monomer (b) which has no fluoroalkyl group and no cross-linkable functional group and of which the glass transition temperature, when formed into a homopolymer, is from 50 to 150°C, and
   units (C) derived from a monomer (c) which has a cross-linkable functional group and no fluoroalkyl group, 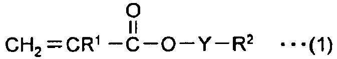 (in the formula (1), R¹ is a hydrogen atom, a methyl group or a halogen atom, Y is a C₁₋₄ bivalent aliphatic group, and R² is a C₁₋₆ linear or branched fluoroalkyl group).
[2] The fluorinated copolymer according to [1], wherein R¹ is a hydrogen atom or a methyl group, Y is a C₂₋₄ polymethylene group, and R² is a C₄₋₆ linear or branched perfluoroalkyl group.
[3] The fluorinated copolymer according to [1] or [2], wherein the monomer (x) is at least one member selected from the group consisting of 2-perfluorohexylethyl acrylate and 2-perfluorohexylyethyl methacrylate.
[4] The fluorinated copolymer according to any one of [1] to [3], wherein the monomer (b) is an alkyl (meth)acrylate wherein the alkyl group has from 1 to 4 carbon atoms.
[5] The fluorinated copolymer according to [4], wherein the monomer (b) is at least one member selected from the group consisting of methyl methacrylate, isobutyl methacrylate and t-butyl methacrylate.
[6] The fluorinated copolymer according to any one of [1] to [5], wherein the monomer (c) is a monomer having a cross-linkable functional group selected from a hydroxy group, a blocked isocyanate group, an amino group and an epoxy group.
[7] The fluorinated copolymer according to [6], wherein the monomer (c) is at least one member selected from the group consisting of 2-hydroxyethyl (meth)acrylate, diethylaminoethyl (meth)acrylate and a 3,5-dimethylpyrazole adduct of 2-isocyanate ethyl (meth)acrylate.
[8] The fluorinated copolymer according to any one of [1] to [7], wherein the polymerization degree of the monomer (x) in the macromonomer (a) is from 2 to 50.
[9] A water/oil repellent composition comprising the fluorinated copolymer as defined in any one of [1] to [8] and a medium.
[10] The water/oil repellent composition according to [9], wherein the medium is an aqueous medium or an organic solvent.
[11] The water/oil repellent composition according to [9] or [10], wherein the content of the fluorinated copolymer is from 20 to 40 mass% in the water/oil repellent composition (100 mass%).
[12] A method for imparting water/oil repellency to an article, which comprises treating the article with the water/oil repellent composition as defined in [9] or [10] wherein the content of the fluorinated copolymer is from 0.2 to 5 mass% in the water/oil repellent composition (100 mass%).
[13] A process for producing the fluorinated copolymer as defined in any one of [1] to [8], which comprises polymerizing, in the presence of a chain transfer agent and a polymerization initiator, a monomer (x) in a proportion of at least 2 times by mol to the chain transfer agent to produce a macromonomer precursor, introducing a polymerizable group to the macromonomer precursor to produce the macromonomer (a), and then, copolymerizing the obtained macromonomer (a) with the monomer (b) and the monomer (c) to obtain the fluorinated copolymer.
[14] The process for producing the fluorinated copolymer according to [13], wherein the chain transfer agent is a mercaptan having a reactive group, and a compound having a polymerizable group and a functional group reactive with the reactive group is reacted with the macromonomer precursor to produce the macromonomer (a).
[15] The process for producing the fluorinated copolymer according to [13] or [14], wherein the chain transfer agent is a mercaptan having a hydroxy group, and (meth)acrylic acid chloride is reacted with the macromonomer precursor to produce the macromonomer (a).

### ADVANTAGEOUS EFFECTS OF INVENTION

The fluorinated copolymer of the present invention will be a component of a water/oil repellent composition which has low environmental impact and whereby adequate water/oil repellency is obtainable, and excellent washing durability is obtainable.

Further, according to the process for producing a fluorinated copolymer of the present invention, it is possible to produce a fluorinated copolymer which will be a component of a water/oil repellent composition which has low environmental impact and whereby adequate water/oil repellency is obtainable, and excellent washing durability is obtainable.

The water/oil repellent composition of the present invention contains the fluorinated copolymer of the present invention, whereby environmental impact is low, adequate water/oil repellency is obtainable, and excellent washing durability is obtainable.

### DESCRIPTION OF EMBODIMENTS

In this specification, (meth)acrylate means acrylate or methacrylate, and the same applies to (meth)acryloyl chloride, (meth)acrylic acid, etc. Further, in this specification, a monomer means a compound having a polymerizable group. The polymerizable group is meant for a group having a carbon-carbon double bond capable of addition polymerization. Further, in this specification, an R^{f} group is a group having some or all of hydrogen atoms in an alkyl group substituted by fluorine atoms, and an R^{F} group is a group having all of hydrogen atoms in an alkyl group substituted by fluorine atoms. Further, in this specification, repeating units derived from a monomer in a polymer are referred to simply as units.

### <Fluorinated copolymer>

The fluorinated copolymer of the present invention is a copolymer comprising units (A) derived from a macromonomer (a) which has, on average, at least two units (X) derived from a monomer (x) as described later, units (B) derived from a monomer (b) which has no R^{f} group and no cross-linkable functional group and of which the glass transition temperature (hereinafter referred to as Tg), when formed into a homopolymer, is from 50 to 150°C, units (C) derived from a monomer (c) which has a cross-linkable functional group and no R^{f} group, and, as the case requires, units (D) derived from a monomer (d). In this specification, the macromonomer (a) is a monomer having a polymerizable group and, on average, at least two units derived from a monomer (x).

### [Units A]

Units A are units derived from a macromonomer (a) which has, on average, at least two units (X) derived from a monomer (x) represented by the following formula (1).

Here, in the following formula (1), R¹ is a hydrogen atom, a methyl group or a halogen atom, Y is a C₁₋₄ bivalent aliphatic group, and R² is a C₁₋₆ linear or branched fluoroalkyl group.

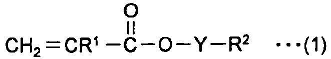

The halogen atom for R¹ may, for example, be a chlorine atom or a fluorine atom.

From the viewpoint of water/oil repellency, R¹ is preferably a hydrogen atom or a methyl group.

From the viewpoint of water/oil repellency, Y is preferably a C₁₋₄ alkylene group, more preferably a C₂₋₄ polymethylene group, particularly preferably a dimethylene group.

From the viewpoint of water/oil repellency, R² is preferably a C₄₋₆ linear or branched R^{F} group, more preferably a C₆ R^{F} group. Specifically, -CF₂CF₂CF₂CF₃, -CF₂CF(CF₃)₂, -C(CF₃)₃, -(CF₂)₄CF₃, -(CF₂)₂CF(CF₃)₂, -CF₂C(CF₃)₃, -CF(CF₃)CF₂CF₂CF₃, -(CF₂)₅CF₃ or -(CF₂)₃CF(CF₃)₂ is preferred, -(CF₂)₅CF₃ or -(CF₂)₃CF(CF₃)₂ is more preferred, and -(CF₂)₅CF₃ is particularly preferred.

Specific examples of the monomer (x) include, for example, 2-perfluorohexylethyl acrylate (hereinafter referred to as "C6FA"), 2-perfluorohexylethyl methacrylate (hereinafter referred to as "C6FMA"), 2-perfluorobutylethyl acrylate, 3,3,4,4,5,5,6,7,7,7-decafluoro-6-(trifluoromethyl)heptyl acrylate, etc. Among them, from the viewpoint of water/oil repellency, C6FA, C6FMA and 3,3,4,4,5,5,6,7,7,7-decafluoro-6-(trifluoromethyl)heptyl acrylate are preferred, and C6FA and C6FMA are more preferred.

Units (X) derived from the monomer (x) in the macromonomer (a) may be one type only, or two or more types in combination, preferably one type only.

The polymerizable group in the macromonomer (a) is preferably at least one member selected from the group consisting of a (meth)acryloyl group, an acrylamide group and a vinyl ether group, more preferably a (meth)acryloyl group.

The polymerization degree of the monomer (x) in the macromonomer (a) is at least 2, since good water/oil repellency is thereby obtainable. Such polymerization degree is preferably from 2 to 50, more preferably from 10 to 40, further preferably 20 to 30. The higher the polymerization degree, the better the water/oil repellency, and the lower the polymerization degree, the better the washing durability. Here, the polymerization degree of the monomer (x) in the macromonomer (a) means an average number of units (X) derived from the monomer (x) per one molecule of the macromonomer (a).

Units (A) may be formed by one type of the macromonomer (a) or may be formed by two or more types of the macromonomer (a).

### [Units (B)]

Units (B) are units derived from a monomer (b) which has no R^{f} group and no cross-linkable functional group and of which Tg, when formed into a homopolymer, is from 50 to 150°C.

Tg of the homopolymer obtained by polymerization of the monomer (b) is preferably from 65 to140°C, more preferably from 80 to 130°C, since it is thereby possible to readily form a coating film excellent in washing durability.

Here, Tg of the homopolymer is a midpoint glass transition temperature obtained by a differential scanning calorimetry (DSC method) in accordance with JIS K-7121:1987, with respect to a homopolymer having a number average molecular weight (Mn) of at least 10,000 obtained by polymerizing the monomer (b).

The monomer (b) is preferably at least one member selected from the group consisting of a (meth)acrylate type monomer, an aromatic hydrocarbon type vinyl monomer and a vinyl ether type monomer.

The (meth)acrylate type monomer may, for example, be methyl methacrylate (hereinafter referred to as "MMA") [Tg (Tg when formed into a homopolymer, the same applies hereinafter): 105°C], ethyl methacrylate [Tg: 65°C], isopropyl methacrylate [Tg: 81°C], isobutyl methacrylate [Tg: 60°C], t-butyl methacrylate [Tg: 118°C], t-butyl acrylate [Tg: 73°C], behenyl acrylate [Tg: 86°C], phenyl methacrylate [Tg: 110°C], phenyl acrylate [Tg: 57°C], isooctyl (meth)acrylate, isodecyl (meth)acrylate, cyclohexyl methacrylate [Tg: 83°C] or benzyl methacrylate [Tg: 54°C].

The aromatic hydrocarbon type vinyl monomer may, for example, be styrene [Tg: 100°C].

The vinyl ether type monomer may, for example, be t-butyl vinyl ether [Tg: 88°C] or cyclohexyl vinyl ether [Tg: 81°C].

As the main chain skeleton of the fluorinated copolymer becomes harder, the water/oil repellency and the washing durability will be better, and therefore, the monomer (b) is preferably an alkyl (meth)acrylate wherein the alkyl group has from 1 to 4 carbon atoms (Tg of its homopolymer is from 50 to 150°C), more preferably at least one member selected from the group consisting of MMA, isobutyl methacrylate and t-butyl methacrylate, particularly preferably MMA.

Units (B) may be formed by one type of the monomer (b) or may be formed by two or more types of the monomer (b).

### [Units (C)]

Units (C) are units derived from a monomer (c) which has a cross-linkable functional group and no R^{f} group.

The fluorinated copolymer of the present invention contains units (C), whereby the adhesion to the substrate is improved, and excellent washing durability is obtainable.

The cross-linkable functional group is preferably a functional group capable of forming at least one bond selected from the group consisting of a covalent bond, an ionic bond and a hydrogen bond, or a functional group capable of forming a cross-linked structure by interaction with such a bond. Further, it may be an active organic group or a group having an active element such as hydrogen or halogen.

The cross-linkable functional group is preferably a hydroxy group, an isocyanate group, a blocked isocyanate group, an alkoxysilyl group, an amino group, an N-alkoxymethylamide group, a silanol group, an ammonium group, an amide group, an epoxy group, an oxazoline group, a carboxy group or a sulfo group, particularly preferably a hydroxy group, a blocked isocyanate group, an amino group or an epoxy group.

As the monomer (c), preferred are (meth)acrylates, acrylamides, vinyl ethers and vinyl esters, which have cross-linkable functional groups. For example, the following compounds may be mentioned.

2-Isocyanate ethyl (meth)acrylate, 3-isocyanate propyl (meth)acrylate, 4-isocyanate butyl (meth)acrylate, 2-butanoneoxime adduct of 2-isocyanate ethyl (meth)acrylate, a pyrazole adduct of 2-isocyanate ethyl (meth)acrylate, 3,5-dimethylpyrazole adduct of 2-isocyanate ethyl (meth)acrylate, 3-methylpyrazole adduct of 2-isocyanate ethyl (meth)acrylate, ε-caprolactam adduct of 2-isocyanate ethyl (meth)acrylate, 2-butanoneoxime adduct of 3-isocyanate propyl (meth)acrylate, pyrazole adduct of 3-isocyanate propyl (meth)acrylate.

3,5-Dimethylpyrazole adduct of 3-isocyanate propyl (meth)acrylate, 3-methylpyrazole adduct of 3-isocyanate propyl (meth)acrylate, ε-caprolactam adduct of 3-isocyanate propyl (meth)acrylate, 2-butanoneoxime adduct of 4-isocyanate butyl (meth)acrylate, pyrazole adduct of 4-isocyanate butyl (meth)acrylate, 3,5-dimethylpyrazole adduct of 4-isocyanate butyl (meth)acrylate, 3-methylpyrazole adduct of 4-isocyanate butyl (meth)acrylate, ε-caprolactam adduct of 4-isocyanate butyl (meth)acrylate.

Methoxymethyl (meth)acrylamide, ethoxymethyl (meth)acrylamide, butoxymethyl (meth)acrylamide, diacetone acrylamide, 3-methacryloyloxypropyltrimethoxysilane, trimethoxyvinylsilane, vinyltrimethoxysilane, dimethylaminoethyl (meth)acrylate, diethylaminoethyl (meth)acrylate, dipropylaminoethyl (meth)acrylate, dibutylaminoethyl (meth)acrylate, dimethylaminopropyl (meth)acrylate, (meth)acryloylmorpholine, (meth)acryloyloxyethyltrimethylammonium chloride, (meth)acryloyloxypropyltrimethylammonium chloride, (meth)acrylamidoethyltrimethylammonium chloride, (meth)acrylamidopropyltrimethylammonium chloride, quaternary ammonium salt of diethylaminoethyl (meth)acrylate, quaternary ammonium salt derived from (meth)acrylic acid such as 2-hydroxy-3-methacryloxypropylammonium chloride.

t-Butyl (meth)acrylamide sulfonic acid, (meth)acrylamide, N-methyl (meth)acrylamide, N-methylol (meth)acrylamide, N-butoxymethyl (meth)acrylamide, diacetone (meth)acrylamide, glycidyl (meth)acrylate, 2-hydroxyethyl (meth)acrylate, 2-hydroxypropyl (meth)acrylate, 4-hydroxybutyl (meth)acrylate, 3-chloro-2-hydroxypropyl methacrylate, polyoxyalkylene glycol mono(meth)acrylate, (meth)acrylic acid, 2-(meth)acryloyloxyethyl succinic acid, 2-(meth)acryloyloxyhexahydrophthalic acid, 2-(meth)acryloyloxyethyl acid phosphate, allyl (meth)acrylate, 2-vinyl-2-oxazoline, polycaprolactone ester of 2-vinyl-4-methyl-(2-vinyloxazoline)hydroxyethyl (meth)acrylate.

Tri(meth)allyl isocyanurate (T (M) AIC, manufactured by Nippon Kasei Chemical Co., Ltd.), triallyl cyanurate (TAC, manufactured by Nippon Kasei Chemical Co., Ltd.), phenylglycidylethyl acrylate tolylene diisocyanate (AT-600, manufactured by Kyoeisha Chemical Co., Ltd.), 3-(methylethylketoxime) isocyanate methyl-3,5,5-trimethylcyclohexyl (2-hydroxyethyl methacrylate) cyanate (Tech Coat HE-6P, manufactured by Kyoken Kasei).

Diethylene glycol mono(meth)acrylate, triethylene glycol mono(meth)acrylate, tetraethylene glycol mono(meth)acrylate, polyethylene glycol mono(meth)acrylate, dipropylene glycol mono(meth)acrylate, tripropylene glycol mono(meth)acrylate, tetrapropylene glycol mono(meth)acrylate, polypropylene glycol (meth)acrylate, 4-(meth)acryloyloxy-2,2,6,6-tetramethylpiperidine, 4-(meth)acryloylamino-2,2,6,6-tetramethylpiperidine, 4-(meth)acryloyloxy-1,2,2,6,6-pentamethylpiperidine, 4-(meth)acryloylamino-1,2,2,6,6-pentamethylpiperidine, 2-hydroxy-4-[2-(meth)acryloxyethoxy]benzophenone, 2-hydroxy-[3-(meth)acryloxy-2-hydroxypropoxy]benzophenone, 2,2'-dihydroxy-4-[3-(meth)acryloxy-2-hydroxypropoxy]benzophenone.

The monomer (c) is particularly preferably at least one member selected from the group consisting of 2-hydroxyethyl (meth)acrylate, diethylaminoethyl (meth)acrylate and a 3,5-dimethylpyrazole adduct of 2-isocyanate ethyl (meth)acrylate.

Units (C) may be one type only, or two or more types in combination.

### [Units (D)]

Units (D) are units other than units (A), units (B) and units (C) and are units derived from a monomer (d) which is other than the macromonomer (a), the monomer (b) and the monomer (c) and which is copolymerizable therewith.

In a case where the medium to be used for the after-described water/oil repellent composition contains water, when the fluorinated copolymer of the present invention has units (D), the dispersion stability and the coating properties when applied to a substrate, will be improved.

The monomer (d) is preferably a (meth)acrylate, of which Tg of the homopolymer will not be from 50 to 150°C, more preferably an alkyl (meth)acrylate, of which Tg of the homopolymer will not be from 50 to 150°C, particularly preferably n-butyl methacrylate.

### [Fluorinated copolymer]

The fluorinated copolymer of the present invention comprises units (A), units (B) and units (C) and may contain units (D) as the case requires. That is, the fluorinated copolymer of the present invention is a copolymer comprising, as units, units (A), units (B) and units (C), or a copolymer comprising, as units, units (A), units (B), units (C) and units (D). Here, in this specification, the term "all units" is meant for the total of units (X), units (B), units (C) and units (D).

In the fluorinated copolymer of the present invention, the molar ratio ((X)/(B)) of units (X) derived from the monomer (x) to units (B) derived from the monomer (b) is preferably from 2/98 to 50/50, more preferably from 10/90 to 50/50, particularly preferably from 15/85 to 45/65. When the molar ratio ((X)/(B)) is within such a range, the water/oil repellency and the washing durability will be better.

The proportion of units (X) in the fluorinated copolymer of the present invention is preferably from 2 to 50 mol%, more preferably from 10 to 40 mol%, further preferably from 15 to 35 mol%, based on all units. When the proportion of units (X) is at least the lower limit value, the water/oil repellency will be more improved. When the proportion of units (X) is at most the upper limit value, the washing durability will be more improved. Here, the proportion of units (A) in all units can be calculated from the proportion of units (X) in all units and the polymerization degree and will be units (X)/polymerization degree.

The proportion of units (B) in the fluorinated copolymer of the present invention is preferably from 49 to 97 mol%, more preferably from 59 to 89 mol%, further preferably from 64 to 84 mol%, based on all units, since the washing durability will be thereby improved.

The proportion of units (C) in the fluorinated copolymer of the present invention is preferably from 1 to 10 mol%, more preferably from 2 to 8 mol%, based on all units, since the adhesion to the substrate will be improved, whereby the washing durability will be better.

The proportion of units (D) in the fluorinated copolymer of the present invention is preferably from 0 to 20 mol%, more preferably from 2 to 10 mol%, particularly preferably from 3 to 8 mol%, based on all units, since the dispersibility in a medium such as water or the coating properties on a substrate will be thereby improved.

The total proportion of units (X), units (B) and units (C) in the fluorinated copolymer of the present invention is preferably from 80 to 100 mol%, more preferably from 90 to 98 mol%, particularly preferably from 93 to 97 mol%, based on all units.

In the present invention, the proportion of units derived from each monomer can be obtained from a ¹H-NMR analysis and an elemental analysis. Here, in a case where it cannot be obtained from a ¹H-NMR analysis and an elemental analysis, it may be calculated based on the charged amount of each monomer at the time of producing the fluorinated copolymer.

The number average molecular weight (Mn) of the fluorinated copolymer of the present invention is preferably from 1,000 to 100,000, more preferably from 20,000 to 80,000.

The weight average molecular weight (Mw) of the fluorinated copolymer of the present invention is preferably from 2,000 to 200,000, more preferably from 30,000 to 100,000.

The fluorinated copolymer of the present invention preferably has a dispersivity (Mn/Mw) of at least 1.5.

In the present invention, Mn and Mw are values calculated by gel permeation chromatography (GPC) under the following conditions.
Apparatus: HLC-8220GPC (manufactured by Tosoh Corporation)
Column: TSK-GEL Super Multipore HZ (manufactured by Tosoh Corporation) Measuring temperature: 40°C
Injection amount: 25 µL
Elution rate: 1 mL/min.
Standard sample: Standard polystyrene (manufactured by Tosoh Corporation)
Eluent: Tetrahydrofuran for high performance liquid chromatography

It is preferred that the fluorinated copolymer of the present invention has a glass transition temperature derived from units (A) (hereinafter referred to as "Tg¹") and a glass transition temperature derived from units (B) (hereinafter referred to as "Tg²"), and Tg¹<Tg². Tg¹ is preferably from -20 to 40°C, and Tg² is preferably from 50 to 150°C. It is more preferred that Tg¹ is from -20 to 40°C, and Tg² is from 60 to 140°C, and it is particularly preferred that Tg¹ is from -20 to 40°C, and Tg² is from 80 to 130°C.

Tg¹ and Tg² are, respectively, midpoint glass transition temperatures obtained by a differential scanning calorimetry (DSC method) in accordance with JIS K-7121:1987.

The reason as to why the fluorinated copolymer of the present invention has adequate water/oil repellency is not necessarily clearly understood, but is considered to be such that in the case of Tg¹<Tg², packing of R^{f} groups one another in side chains of units (A) is fixed by units (B) with Tg higher than units (A). Further, it is considered that by the presence of units (C) in addition to units (A) and units (B), the adhesion to the substrate is improved, whereby excellent washing durability is obtainable.

Further, the fluorinated copolymer of the present invention employs R^{f} groups having at most 6 carbon atoms, whereby it is possible to reduce the content of perfluorooctanoic acid (PFOA), perfluorooctane sulfonic acid (PFOS) and their derivatives, of which an influence to the environment is worried, to be less than the detectable lower limit, and thus to reduce the environmental impact.

### <Process for producing fluorinated copolymer>

The process for producing a fluorinated copolymer of the present invention is a process which comprises polymerizing, in the presence of a chain transfer agent and a polymerization initiator, a monomer (x) in a proportion of at least 2 times by mol to the chain transfer agent to produce a macromonomer precursor, introducing a polymerizable group to the macromonomer precursor to produce the macromonomer (a), and then, copolymerizing the obtained macromonomer (a) with the monomer (b) and the monomer (c) to obtain a fluorinated copolymer.

Hereinafter, the step of polymerizing, in the presence of a chain transfer agent and a polymerization initiator, a monomer (x) in a proportion of at least 2 times by mol to the chain transfer agent to produce a macromonomer precursor, will be referred to as step (I), the step of introducing a polymerizable group to the macromonomer precursor to produce the macromonomer (a), will be referred to as step (II), and the step of copolymerizing the obtained macromonomer (a) with the monomer (b) and the monomer (c) to obtain a fluorinated copolymer, will be referred to as step (III).

### [Step (I)]

In the presence of a chain transfer agent and a polymerization initiator, a monomer (x) in a proportion of at least 2 times by mol to the chain transfer agent is polymerized to produce a macromonomer precursor.

The proportion of the monomer (x) is preferably from 2 to 50 times by mol, more preferably from 10 to 40 times by mol, further preferably from 20 to 30 times by mol, to the chain transfer agent. As the proportion of the monomer (x) is large, it becomes easy to obtain a fluorinated copolymer having good water/oil repellency. As the proportion of the monomer (x) is small, it becomes easy to obtain a fluorinated copolymer excellent in washing durability.

The chain transfer agent to be used in the present invention has, together with a group for chain transfer (e.g. a mercapto group), a reactive group for introducing a polymerizable group to the macromonomer precursor. The macromonomer precursor obtainable in step (I) has a residual group of the chain transfer agent at its terminal, and in step (II), a polymerizable group is introduced to a reactive group of the residual group of the chain transfer agent to produce the macromonomer (a). The reactive group in the chain transfer agent is preferably a group having active hydrogen, and the group having active hydrogen may, for example, be a hydroxy group, a carboxy group or an amino group. The reactive group is preferably a hydroxy group or a carboxy group.

The chain transfer agent is preferably a mercaptan which has a group having active hydrogen, and for example, a hydroxyalkylmercaptan or a mercaptocarboxylic acid may be mentioned. Specifically, preferred chain transfer agents include, for example, 2-mercaptoethanol, mercaptopropionic acid, mercaptoacetic acid, etc.

As the polymerization initiator, a common initiator such as an azo-type polymerization initiator, a peroxide-type polymerization initiator or a redox-type initiator may be employed depending upon the polymerization temperature. As the polymerization initiator, an azo-type compound is preferred, and α,α'-azobisisobutyronitrile is particularly preferred.

The proportion of the polymerization initiator is preferably from 0.001 to 1 mol, more preferably from 0.001 to 0.1 mol, further preferably from 0.002 to 0.05 mol, to 1 mol of the monomer (x).

For the polymerization in step (I), a polymerization solvent may be used as the case requires.

As the polymerization solvent, a fluorinated solvent is preferred, since the solubility of the monomer (x) is thereby high. As the fluorinated solvent, a hydrofluorocarbon or a hydrofluoroether may, for example, be mentioned. Among them, dichloropentafluoropropane (AK-225) is particularly preferred.

The amount of the polymerization solvent is preferably from 20 to 90 mass%, more preferably from 40 to 70 mass%, particularly preferably from 45 to 60 mass%, to the total of the polymerization initiator, the chain transfer agent, the monomer (x) and the polymerization solvent.

The polymerization time is preferably from 6 to 50 hours, more preferably from 12 to 48 hours.

The polymerization temperature is preferably from 50 to 80°C, more preferably from 60 to 70°C.

### [Step (II)]

A compound having a polymerizable group and a functional group reactive with a reactive group of the chain transfer agent, is reacted to the macromonomer precursor obtained in step (I) to produce a macromonomer (a). It is thereby possible to obtain a macromonomer (a) having a polymerizable group and, on average, at least 2 units derived from the monomer (x).

The functional group in the compound having a polymerizable group and a functional group reactive with a reactive group of the chain transfer agent, is a group which is selected depending upon the type of the reactive group of the chain transfer agent. For example, in a case where the reactive group of the chain transfer agent is a hydroxy group, the functional group may, for example, be a carboxy group, a chloroformyl group, an epoxy group or an isocyanate group, and in a case where the reactive group is a carboxy group, the functional group may, for example, be a hydroxy group, an epoxy group, an amino group or an isocyanate group. The polymerizable group may, for example, be a (meth)acryloyl group, a (meth)acryloyloxy group or a vinyloxy group. As the polymerizable group, a group whereby the polymerizable group of the macromonomer (a) will be a (meth)acryloyloxy group, is preferred, since the copolymerizability with the monomer (b) or the monomer (c) will be high.

In a case where the reactive group of the chain transfer agent is a hydroxy group, as the compound having a polymerizable group and a functional group reactive with the reactive group of the chain transfer agent, (meth)acryloyl chloride and (meth)acrylic acid are preferred, and (meth)acryloyl chloride is particularly preferred.

Now, step (II) will be described with reference to a specific case wherein the chain transfer agent is a hydroxyalkylmercaptan, and the compound having a polymerizable group and a functional group reactive with a reactive group of the chain transfer agent is (meth)acryloyl chloride and (meth)acrylic acid.

In step (II), when the macromonomer precursor is to be reacted with the (meth)acryloyl chloride, it is preferred to use a base. As the base, an amine compound may, for example, be mentioned. Among them, triethylamine is preferred, since it is readily available and easy to handle.

The proportion of the (meth)acryloyl chloride is preferably at least 1 equivalent, more preferably from 2 to 3 equivalent, to the macromonomer precursor obtained in step (I).

The proportion of the base is preferably at least 1 equivalent, more preferably from 2.5 to 3.5 equivalent, to the macromonomer precursor obtained in step (I).

In step (II), when the macromonomer precursor is reacted with the (meth)acrylic acid, it is preferred to use a condensing agent. As the condensing agent, dicyclohexyl carbodiimide (DCC) may, for example, be mentioned.

The proportion of the (meth)acrylic acid is preferably at least 1 equivalent, more preferably from 1 to 1.2 equivalent, particularly preferably 1 equivalent, to the macromonomer precursor obtained in step (I).

The proportion of the condensing agent is preferably at least 1 equivalent, more preferably from 1 to 1.1 equivalent, particularly preferably 1 equivalent, to the macromonomer precursor obtained in step (I).

In step (II), it is preferred to use a reaction solvent.

As the reaction solvent, a fluorinated solvent is preferred, and AK-225 is particularly preferred, since the solubility of the macromonomer precursor obtained in step (I) is thereby high.

The amount of the reaction solvent is preferably from 10 to 50 mass%, more preferably from 20 to 40 mass%, particularly preferably from 25 to 35 mass%, to the total mass of the components to be used for the reaction.

### [Step (III)]

In the presence of a polymerization initiator, the macromonomer (a) obtained in step (II), the monomer (b) and the monomer (c), and the monomer (d) to be used as the case requires, are copolymerized to obtain a fluorinated copolymer.

In step (III), the molar ratio ((x)/(b)) of the monomer (x) used in step (I) to the monomer (b) to be used in step (III) is adjusted to be preferably from 2/98 to 50/50, more preferably from 5/95 to 45/65, further preferably from 10/90 to 40/60. When the molar ratio (x)/(b) is within such a range, the dynamic water repellency and washing durability of the obtainable fluorinated copolymer will be improved.

The proportion of the macromonomer (a) to the total amount of all monomers to be used in step (III), is preferably from 10 to 90 mass%, more preferably from 20 to 80 mass%, further preferably from 40 to 70 mass%. When the proportion of the macromonomer (a) is at least the lower limit value, it is possible to obtain a fluorinated copolymer having better water/oil repellency. When the proportion of the macromonomer (a) is at most the upper limit value, it is possible to obtain a fluorinated copolymer having better washing durability.

The proportion of the monomer (b) to the total amount of all monomers to be used in step (III) is preferably from 9 to 89 mass%, more preferably from 19 to 79 mass%, further preferably from 29 to 59 mass%, since it is thereby possible to obtain a fluorinated copolymer having better washing durability.

The proportion of the monomer (c) to the total amount of all monomers to be used in step (III) is preferably from 1 to 20 mass%, more preferably from 2 to 10 mass%, since it is thereby possible to obtain a fluorinated copolymer having high adhesion to the substrate and better washing durability.

The proportion of the monomer (d) to the total amount of all monomers to be used in step (III) is preferably from 0 to 20 mass%, more preferably from 2 to 10 mass%, since it is thereby possible to obtain a fluorinated copolymer having better dispersibility in a medium such as water or better coating properties on a substrate.

The proportion of the total amount of the macromonomer (a), the monomer (b) and the monomer (c) to the total amount of all monomers to be used in step (III) is preferably from 80 to 100 mol%, more preferably from 90 to 98 mol%, particularly preferably from 93 to 97 mol%.

As the polymerization initiator, those mentioned in step (I) may, for example, be mentioned.

The amount of the polymerization initiator is preferably from 0.001 to 1 mol, more preferably from 0.001 to 0.1 mol, further preferably from 0.002 to 0.05 mol, to 1 mol in total of the macromonomer (a), the monomer (b), the monomer (c) and the monomer (d).

In step (III), a polymerization solvent may be used.

As the polymerization solvent, a mixed solvent of a fluorinated solvent and a hydrocarbon solvent may, for example, be mentioned. Particularly preferred is a mixed solvent wherein a fluorinated solvent is mixed in a mass proportion corresponding to the amount of charge of the macromonomer (a), and a hydrocarbon solvent is mixed in a mass proportion corresponding to the total amount of charge of the monomer (b), the monomer (c) and the monomer (d).

The fluorinated solvent may, for example, be AK-225, 1,1,2,2-tetrafluoroethyl-trifluoroethyl ether (AE-3000, manufactured by Asahi Glass Company Limited), n-tridecafluorohexane (AC-2000, manufactured by Asahi Glass Company Limited) or meta-xylene hexafluoride.

The hydrocarbon solvent may, for example, be acetone, tetrahydrofuran, methyl ethyl ketone or 1-methoxypropyl-2-acetate (PEGMEA).

The above mixed solvent is preferably a mixed solvent of AK-225 and acetone from the viewpoint of the handling efficiency or the solubility of the macromonomer (a), the monomer (b), the monomer (c) and the monomer (d).

The polymerization time is preferably from 6 to 30 hours, more preferably from 12 to 24 hours.

The polymerization temperature is preferably from 50 to 80°C, more preferably from 60 to 70°C.

Further, the process for producing a fluorinated copolymer of the present invention is not limited to the above-described process. For example, in a case where a macromonomer (a) having an acrylamide group as the polymerizable group is to be used, in the above step (II), a macromonomer precursor having a carboxy group and an acrylamide may be reacted. Or, in a case where a macromonomer (a) having a vinyl ether group as the polymerizable group is to be used, in the above step (II), a macromonomer precursor having a carboxy group and ethylene glycol monovinyl ether may be reacted.

### <Water/oil repellent composition>

The water/oil repellent composition of the present invention is a composition comprising the fluorinated copolymer of the present invention and a medium, as the essential components, and it may contain a surfactant and additives, as the case requires. The water/oil repellent composition of the present invention may be used in an optional formulation such as a solution, an emulsion or an aerosol.

The fluorinated copolymer of the present invention to be used for the water/oil repellent composition of the present invention may be one type only, or two or more types in combination.

The medium may be an aqueous medium or an organic solvent, and an aqueous medium is preferred. The aqueous medium is meant for a medium composed solely of water, or a medium containing an organic solvent in an amount of at most 80 parts by mass per 100 parts by mass of water.

The organic solvent may be a fluorinated organic solvent or a non-fluorinated organic solvent. Among them, a fluorinated organic solvent is preferred in view of the non-flammability and from such a viewpoint that it is thereby possible to form a uniform coating film having a low surface tension and a small thickness irregularity.

The fluorinated organic solvent may, for example, be AK-225 or meta-xylene hexafluoride (mxHF, manufactured by Tokyo Chemical Industry Co., Ltd.).

The non-fluorinated organic solvent may, for example, be acetone, toluene, tetrahydrofuran or chlorobenzene.

As the organic solvent, one type may be used alone, or two or more types may be used in combination.

From the viewpoint of economical efficiency, it is common that the water/oil repellent composition is stored in a highly concentrated state from immediately after the production till before treating an article, and at the time of treating an article, is diluted with an aqueous medium or an organic solvent, and by using the diluted water/oil repellent composition, an article is treated.

The content of the fluorinated copolymer of the present invention in the water/oil repellent composition (100 mass%) of the present invention immediately after the production, is preferably from 20 to 40 mass%.

The content of the fluorinated copolymer of the present invention in the water/oil repellent composition (100 mass%) of the present invention at the time of treating an article, is preferably from 0.2 to 5 mass%.

The surfactant may be a hydrocarbon surfactant or a fluorinated surfactant, and each may be an anionic surfactant, a non-ionic surfactant, a cationic surfactant or an amphoteric surfactant.

From the viewpoint of dispersibility, the surfactant is preferably a combined use of a non-ionic surfactant and a cationic surfactant or an amphoteric surfactant, or a single use of an anionic surfactant, and a combined use of a non-ionic surfactant and a cationic surfactant is more preferred.

The content of the surfactant in the water/oil repellent composition (100 mass%) of the present invention is preferably from 0 to 20 mass%, more preferably from 0 to 15 mass%.

The additives include, for example, a penetrant, a defoaming agent, a water-absorbing agent, an antistatic agent, an antistatic polymer, an anticrease agent, a texture-adjusting agent, a film-forming assistant, a water-soluble polymer (a polyacrylamide, a polyvinyl alcohol, etc.), a thermosetting agent (a melamine resin, a urethane resin, a triazine ring-containing compound, an isocyanate type compound, etc.), an epoxy-curing agent (isophthalic acid dihydrazide, adipic acid dihydrazide, sebacic acid dihydrazide, dodecanedioic acid dihydrazide, 1,6-hexamethylenebis(N,N-dimethylsemicarbazide), 1,1,1',1'-tetramethyl-4,4'-(methylene-di-p-phenylene)disemicarbazide, spiro-glycol, etc.), a thermosetting catalyst, a cross-linking catalyst (an organic acid, ammonium chloride, etc.), a synthetic resin, a fiber-stabilizer, inorganic fine particles, etc.

Further, the water/oil repellent composition of the present invention may contain a polymer capable of exhibiting water repellency and/or oil repellency (e.g. a commercially available water repellent, a commercially available oil repellent, a commercially available water/oil repellent or a commercially available antifouling agent) or a water repellent compound having no fluorine atoms, other than the fluorinated copolymer of the present invention, as the case requires.

The water repellent compound having no fluorine atoms may, for example, be a paraffin compound, an aliphatic amide compound, an alkylethylene urea compound or a silicone compound.

The water/oil repellent composition of the present invention is applied on the surface of a substrate to form a coating film, whereby it is possible to impart adequate water/oil repellency to the substrate, and it is possible to obtain excellent washing durability.

The substrate may, for example, be an inorganic substrate (such as metal or glass), a resin substrate (such as polycarbonate) or a stone material.

As the method for applying the water/oil repellent composition of the present invention, a known method such as a roll coating method, a casting method, a dip coating method, a spin coating method or a spray coating method may be employed.

### EXAMPLES

Now, the present invention will be described in detail with reference to Examples, but it should be understood that the present invention is by no means restricted by the following description. Ex. 1, 2 and 7 to 11 are Examples of the present invention, and Ex. 3 to 6 and 12 to 15 are Comparative Examples.

### [Raw materials, etc.]

The raw materials, etc. used in the Examples are as follows.

### (Monomers)

C6FA: 2-Perfluorohexylethyl acrylate (synthesized by a known method by using 2-perfluorohexylethanol as raw material).
C6FMA: 2-Perfluorohexylethyl methacrylate (synthesized by a known method by using 2-perfluorohexylethanol as raw material).
MMA: Methyl methacrylate (manufactured by Tokyo Chemical Industry Co., Ltd., one purified by simple distillation)
DEAEMA: Diethylaminoethyl methacrylate (manufactured by Tokyo Chemical Industry Co., Ltd.)
nBMA: n-Butyl methacrylate (Tg: 20°C, manufactured by Tokyo Chemical Industry Co., Ltd., one purified by simple distillation)
iBMA: Isobutyl methacrylate (Tg: 60°C, manufactured by Tokyo Chemical Industry Co., Ltd., one purified by simple distillation). (polymerization initiator)
AIBN: α,α'-azobisisobutyronitrile (manufactured by Kanto Chemical Co., Inc.)

### (Other reagents)

Acetone, tetrahydrofuran, methanol, hexane, triethylamine, ammonium chloride and anhydrous magnesium sulfate (all manufactured by Kanto Chemical Co., Inc.); dichloropentafluoropropane (AK-225, manufactured by Asahi Glass Company Limited); and mercaptoethanol and methacryloyl chloride (all manufactured by Tokyo Chemical Industry Co., Ltd.)

### [Polymerization degree of monomer (x) in macromonomer (a)]

The polymerization degree of C6FA in a macromonomer (a) having units derived from C6FA, was calculated by subjecting the macromonomer precursor to ¹H-NMR measurement.

Here, the ¹H-NMR measurement method is as follows.
Apparatus: Manufactured by JEOL, 300 MHz.
Solvent: CDCl₃
Internal standard: Trimethylsilane

That is, it was calculated from the integration ratio of protons of -CH₂- adjacent to -OH in the vicinity of 3.7 ppm to protons of -CH₂- adjacent to -CF₂- in the vicinity of 4.4 ppm.

Likewise, the polymerization degree of C6FMA in a macromonomer (a) having units derived from C6FMA was calculated by subjecting the macromonomer precursor to ¹H-NMR measurement. It was calculated from the integration ratio of protons of -CH₂- adjacent to -OH in the vicinity of 3.7 ppm to protons of -CH₂- adjacent to -CF₂- in the vicinity of 4.4 ppm.

### [Composition of fluorinated copolymer]

The composition of the fluorinated copolymer recovered in each Ex. was measured by ¹H-NMR and calculated. The ratios (mol%) of C6FA units, MMA units, DEAEMA units, nBMA units and iBMA units were calculated from the integration ratios of protons of C6FA units in the vicinity of 4.3 ppm, protons of MMA units in the vicinity of 3.6 ppm, DEAEMA units in the vicinity of 4.1 ppm, nBMA units in the vicinity of 4.0 ppm and iBMA units in the vicinity of 3.8 ppm.

Likewise, the ratios (mol%) of C6FMA units, MMA units, DEAEMA units, nBMA units and iBMA units were calculated from the integration ratios of protons of C6FMA units in the vicinity of 4.3 ppm, protons of MMA units in the vicinity of 3.6 ppm, DEAEMA units in the vicinity of 4.1 ppm, nBMA units in the vicinity of 4.0 ppm and iBMA units in the vicinity of 3.8 ppm.

### [Number average molecular weight (Mn) and weight average molecular weight (Mw)]

In tetrahydrofuran for high performance liquid chromatography, the fluorinated copolymer recovered in each Ex. was dissolved to be 0.5 mass%, followed by filtration by a filter with a pore diameter of 0.2 µm to obtain an analytical sample. With respect to the analytical sample, the number average molecular weight (Mn) and the weight average molecular weight (Mw) were measured under the following conditions.
Apparatus: HLC-8220GPC (manufactured by Tosoh Corporation)
Column: TSK-GEL Super Multipore HZ (manufactured by Tosoh Corporation)
Measuring temperature: 40°C
Injection amount: 25 µL
Elution rate: 1 mL/min.
Standard sample: Standard polystyrene (manufactured by Tosoh Corporation)
Eluent: Tetrahydrofuran for high performance liquid chromatography

### [Glass transition temperature]

Tg of the fluorinated copolymer recovered in each Ex. was measured by differential scanning calorimetry (DSC method). Tg is a midpoint glass transition temperature obtained in accordance with JIS K-7121, 1987 and is read out from a curve in a heating rate of 10°C/min.
Apparatus: DSC Q100 (manufactured by TA Instrument)
Scanning temperature range: From -80 to 200°C
Scanning rate: 10°C/min.

Tg was measured twice for the same sample, and the data in the 2nd measurement were adopted.

### [Evaluation of water/oil repellency]

Evaluation of the water/oil repellency was carried out as follows.

### 1. Preparation of test cloth

A base material cloth (nylon taslan, non-treated cloth) was immersed in 57 g of the water/oil repellent composition obtained in each Ex., squeezed by a mangle to a wet pickup of from 80 to 90% and air-dried for one hour at room temperature, and further subjected to curing heat treatment at 170°C for 60 seconds, to obtain a test cloth.

### 2. Evaluation method for oil repellency: oil repellency grades (OR)

With respect to the test cloth prepared by the above method, the oil repellency was evaluated by AATCC standards-TM118 method and represented by the oil repellency grades as shown in Table 1. The oil repellency grades are based on the wettability of 8 types of hydrocarbon solvents (test liquids) different in surface tension, to the cloth. The larger the oil repellency grade, the higher the oil repellency. Here, an oil repellency grade having +(-) put thereto, means that the relevant performance is slightly better (worse). Hereinafter, this oil repellency grade is represented by "OR".

### 3. Evaluation method for water repellency: water repellency grades (WR)

With respect to the test cloth prepared by the above method, the water repellency was evaluated by a spray test in accordance with JIS L-1092:1992. The water repellency was represented by 5 grades of from 1 to 5. The larger the score, the higher the water repellency. Here, a grade having +(-) put thereto, means that the relevant performance is slightly better (worse). Hereinafter, this water repellency grade is represented by "WR".

**[Table 1]**

| Oil repellency No. | Test liquid | Surface tension (25°C) [mN/m] |
|---|---|---|
| 8 | n-Heptane | 20.0 |
| 7 | n-Octane | 21.8 |
| 6 | n-Decane | 23.5 |
| 5 | n-Dodecane | 25.0 |
| 4 | n-Tetradecane | 26.7 |
| 3 | n-Hexadecane | 27.3 |
| 2 | 65 Parts of Nujol/ 35 parts of hexadecane | 29.6 |
| 1 | Nujol | 31.2 |
| 0 | One less than 1 | - |

### [Evaluation of washing durability]

The test cloth prepared by the above method was washed by a washing method in accordance with JIS L-0217 103. Here, as a detergent, a weakly alkaline detergent was used, and no ironing finish was carried out. The evaluation of OR and WR before carrying out washing was represented by an initial evaluation (HL(0)), and OR and WR after repeating the washing 5 times (HL(5)) and after repeating the washing 20 times (HL(20)) were evaluated.

### [Ex. 1]

### Step (I): Synthesis of macromonomer precursor

Into a 300 mL three-necked flask, C6FA (109 g, 261 mmoL), 2-mercaptoethanol (1 g, 12.3 mmoL) as a chain transfer agent, AIBN (0.2 g, 1.3 mmoL) as a polymerization initiator and AK-225 (110 g, 533 mmoL) as a solvent, were charged and, after attaching a circulation-type Dimroth condenser and a stirrer, gradually heated to 60°C in a nitrogen atmosphere and stirred. 18 Hours later (after stirring overnight), the mixture was cooled under room temperature to obtain a polymerization crude solution. The obtained crude solution was dropped into about 20 times by mass of cooled methanol, followed by stirring to precipitate a macromonomer precursor. The obtained macromonomer precursor was collected by filtration and vacuum-dried overnight at 50°C to obtain a macromonomer precursor (1) having units derived from C6FA. The polymerization degree of the obtained macromonomer precursor (1) was obtained by ¹H-NMR measurement.

### Step (II): Synthesis of macromonomer (a)

Into a 100 mL two-necked flask, the macromonomer precursor (1) (30 g, 3.2 mmoL) and AK-225 (60 mL) were charged and while adjusting the concentration of the macromonomer precursor (1) to be about 30 mass%, stirred in an ice bath in a nitrogen atmosphere. Then, triethylamine (1.8 mL, 6.5 mmoL) was dropwise added thereto, followed by stirring for 30 minutes, whereupon methacryloyl chloride (1.1 mL, 3.9 mmoL) was slowly dropwise added. After stirring in an ice bath for one hour, stirring was further carried out in a nitrogen atmosphere for 2 hours, whereupon a saturated ammonium chloride aqueous solution was added until the reaction solution became pH7 to terminate the reaction. The obtained reaction solution was washed with water and AK-225, and the obtained organic layer was dehydrated by anhydrous magnesium sulfate. Then, filtration was carried out, and from the obtained organic layer, AK-225 was distilled off under reduced pressure, followed by filtration by means of a polytetrafluoroethylene (PTFE) filter with a pore diameter of 0.5 µm. Further, vacuum drying was carried out overnight at 50°C to completely remove the solvent, thereby to obtain a macromonomer (a-1) having units derived from C6FA.

### Step (III): Synthesis of fluorinated copolymer

Into a 30 mL glass ampule for polymerization, the macromonomer (a-1) (2.6 g), MMA (1.6 g) as the monomer (b), DEAEMA (0.08 g) as the monomer (c), AIBN (0.03 g) as a polymerization initiator, AK-225 (5 g) as a solvent and dehydrated acetone (4 g) were charged. Then, nitrogen gas was blown into the ampule, and the ampule was sealed and heated in an incubator at 60°C for 18 hours (overnight) to obtain a reaction solution containing a fluorinated copolymer. The reaction solution was cooled, whereupon the ampule was opened, and the reaction solution was dropwise added to 20 times by mass of cooled hexane, followed by stirring to precipitate solid. The obtained solid was collected by filtration and vacuum-dried at 40°C overnight to obtain a fluorinated copolymer (1). The obtained fluorinated copolymer (1) was subjected to 1 H-NMR measurement, whereupon its composition was calculated.

The obtained fluorinated copolymer (1) was white solid and soluble in acetone and AK-225.

To a solution having 0.7 g of the obtained fluorinated copolymer (1) dissolved in 40 g of acetone, a solution having 0.14 g of lithium diisopropylamide (LAD) dissolved in 16 g of acetone, was added to obtain a water/oil repellent composition (1).

### [Ex. 2 to 6]

Fluorinated copolymers (2) to (6) were synthesized in the same manner as in Ex. 1 except that the compositional ratios of the respective components to be used for the syntheses in the steps (I) and (III) were changed as shown in Table 2. Further, in the same manner as in Ex. 1, water/oil repellent compositions (2) to (6) containing the fluorinated copolymers (2) to (6), respectively, were prepared.

The results of evaluation of the water/oil repellency and the washing durability in Ex. 1 to 6 are shown in Table 3.

**[Table 2]**

| Unit: g | | | | | | | |
|---|---|---|---|---|---|---|---|
| | | Ex. 1 | Ex. 2 | Ex. 3 | Ex. 4 | Ex. 5 | Ex. 6 |
| Step (I) | C6FA | 109 | 109 | 22 | 20 | 109 | 44 |
| | 2-Mercapto-ethanol | 1 | 1 | 0.8 | 0.33 | 1 | 0.2 |
| | AIBN | 0.2 | 0.2 | 0.2 | 0.07 | 0.2 | 0.02 |
| | AK-225 | 110 | 110 | 23 | 21 | 110 | 43 |
| Step (III) | Macromonomer | 2.6 | 2 | 2.4 | 2.4 | 3.2 | 2.4 |
| | MMA | 1.6 | 1.4 | 1.7 | 1.7 | 3.4 | 1.7 |
| | iBMA | - | - | - | - | - | - |
| | DEAEMA | 0.08 | 0.18 | - | - | - | - |
| | nBMA | - | - | - | - | - | - |
| | AIBN | 0.03 | 0.02 | 0.02 | 0.02 | 0.06 | 0.02 |
| | AK-225 | 5 | 5 | 5 | 5 | 5.9 | 5 |
| | Acetone | 4 | 4 | 4 | 4 | 8 | 4 |

**[Table 3]**

| | | | Ex. 1 | Ex. 2 | Ex. 3 | Ex. 4 | Ex. 5 | Ex. 6 |
|---|---|---|---|---|---|---|---|---|
| Compositional ratio (mol%) | Unit (X) | C6FA | 27 | 29 | 24 | 23 | 16 | 30 |
| | Unit (B) | MMA | 71 | 66 | 76 | 77 | 84 | 70 |
| | Unit (C) | DEAEMA | 2 | 5 | - | - | - | - |
| Polymerization degree of C6FA in macromonomer | | | 22 | 23 | 7 | 14 | 22 | 43 |
| Tg¹ [°C] | | | -8.9 | -9.1 | -20.4 | -8.9 | -8.2 | -6.3 |
| Tg² [°C] | | | 112.2 | 108.4 | 96.8 | 114.2 | 118.8 | 125.3 |
| Oil repellency | | HL(0) | 3 | 4- | 4-5 | 4-5 | 4-5 | 5 |
| | | HL(5) | 3- | 3-4 | 4 | 4-5 | 4-5 | 4-5 |
| | | HL(20) | 2 | 3-4 | 3- | 3- | 3 | 3- |
| Water repellency | | HL(0) | 3+ | 4 | 3 | 3-4 | 3-4 | 3-4 |
| | | HL(5) | 3 | 3 | 2+ | 2+ | 3-4 | 3 |
| | | HL(20) | 2+ | 3- | 1 | 1 | 2- | 1 |

As shown in Table 3, in Ex. 1 and Ex. 2 wherein water/oil repellent compositions (1) and (2) containing fluorinated copolymers having units (A) as units having units X, units (B) and units (C), were used, adequate water/oil repellency was obtained, and even after washing, decrease in the water/oil repellency was prevented, and excellent washing durability was obtained.

On the other hand, in Ex. 3 to 6 wherein water/oil repellent compositions (3) to (6) containing fluorinated copolymers having units (A) and units (B) but not having units (C), were used, adequate water/oil repellency was obtained initially and after washing, decrease in oil repellency was prevented, but after washing, water repellency was substantially decreased.

### [Ex. 7 to 15]

Fluorinated copolymers (7) to (15) were synthesized in the same manner as in Ex.1 except that in step (I), C6FMA was used instead of C6FA, and the compositional ratios of the respective components to be used in the syntheses in the steps (I) and (III) were changed as shown in Table 4. Further, in the same manner as in Ex. 1, water/oil repellent compositions (7) to (15) containing the fluorinated copolymers (7) to (15), respectively, were prepared.

The results of evaluation of the water/oil repellency and the washing durability in Ex. 7 to 15 are shown in Table 5.

**[Table 4]**

| Unit: g | | | | | | | | | | |
|---|---|---|---|---|---|---|---|---|---|---|
| | | Ex. 7 | Ex. 8 | Ex. 9 | Ex.10 | Ex.11 | Ex.12 | Ex.13 | Ex.14 | Ex.15 |
| Step (I) | C6FMA | 110 | 110 | 110 | 11.3 | 21 | 110 | 110 | 110 | 110 |
| | 2-Mercaptoethanol | 1 | 1 | 1 | 0.1 | 1.9 | 1 | 1 | 1 | 1 |
| | AIBN | 0.2 | 0.2 | 0.2 | 0.02 | 0.03 | 0.2 | 0.2 | 0.2 | 0.2 |
| | AK-225 | 112 | 112 | 112 | 11.3 | 105 | 112 | 112 | 112 | 112 |
| Step (III) | Macromonomer | 2.6 | 1.7 | 1.7 | 1.2 | 1.8 | 1 | 1 | 3.7 | 2.3 |
| | MMA | 1.6 | 0.9 | 0.9 | 0.7 | 1.1 | - | 2 | 2.4 | 0.8 |
| | iBMA | - | - | 0.22 | - | - | - | - | - | - |
| | DEAEMA | 0.08 | 0.14 | 0.14 | 0.1 | 0.15 | - | - | - | - |
| | nBMA | - | 0.22 | - | - | - | 1 | - | - | - |
| | AIBN | 0.03 | 0.01 | 0.01 | 0.01 | 0.015 | 0.01 | 0.015 | 0.04 | 0.015 |
| | AK-225 | 3 | 4 | 4 | 3 | 4 | 2 | 2 | 10 | 5 |
| | Acetone | 5 | 3 | 3 | 2 | 3 | 2 | 5 | 5 | 2 |

**[Table 5]**

| | | | Ex. 7 | Ex. 8 | Ex. 9 | Ex. 10 | Ex. 11 | Ex. 12 | Ex. 13 | Ex. 14 | Ex. 15 |
|---|---|---|---|---|---|---|---|---|---|---|---|
| Compositional ratio (mol%) | Unit (X) | C6FMA | 27 | 31 | 29 | 25 | 25 | 22 | 10 | 26 | 46 |
| | Unit (B) | MMA | 71 | 55 | - | 69 | 69 | - | 90 | 74 | 54 |
| | | iBMA | - | - | 65 | - | - | - | - | - | - |
| | Unit (C) | DEAEMA | 2 | 5 | 6 | 6 | 6 | - | - | - | - |
| | Unit | (D) nBMA | - | 9 | - | - | - | 78 | - | - | - |
| Polymerization degree of C6FMA in macromonomer | | | 23 | 27 | 27 | 14 | 41 | 27 | 27 | 27 | 27 |
| Tg¹ [°C] | | | 26.1 | 24.3 | 27.5 | 21.4 | 29.9 | 33.1 | 21.4 | 29.8 | 30.0 |
| Tg² [°C] | | | 119.8 | 96.5 | 56 | 107.2 | 108.9 | - | 126.6 | 121.2 | 116.1 |
| Oil repellency | | HL(0) | 5 | 5 | 5-6 | 6- | 5-6 | 5- | 5 | 5- | 5-6 |
| | | HL(5) | 3-4 | 3-4 | 4- | 5- | 5- | 0 | 2 | 2-3 | 2 |
| | | HL(20) | 3 | 3 | 3-4 | 4 | 4 | 0 | 0 | 2- | 1- |
| Water repellency | | HL(0) | 4- | 4-5 | 4-5 | 4 | 4-5 | 3-4 | 3-4 | 4-5 | 4 |
| | | HL(5) | 3 | 3-4 | 3-4 | 3 | 3-4 | 0 | 1-2 | 2+ | 2 |
| | | HL(20) | 3 | 2+ | 2+ | 3 | 3 | 0 | 0 | 1-2 | 1 |

As shown in Table 5, in Ex. 7 to 11 wherein water/oil repellent compositions (7) to (11) containing fluorinated copolymers having units (A) as units having units X, units (B) and units (C), were used, adequate water/oil repellency was obtained, and even after washing, decrease in the water/oil repellency was prevented, and excellent washing durability was obtained.

On the other hand, in Ex. 12 wherein water/oil repellent composition (12) containing a fluorinated copolymer not having units (B) and (C), was used, adequate water/oil repellency was obtained initially, but after washing, the water/oil repellency was almost lost.

In Ex. 13 to 15 wherein water/oil repellent compositions (13) to (15) containing fluorinated copolymers having units (A) and units (B) but not having units (C), were used, the water repellency was substantially decreased especially after washing.

### INDUSTRIAL APPLICABILITY

The fluorinated copolymer of the present invention is useful for a water/oil repellent composition for fiber products (clothing products (e.g. sports-wear, coats, blouson, work clothes, uniforms, etc.), bags, industrial materials, etc.), non-woven fabrics, leather products, stone materials, concrete type building materials, etc. Further, it is useful also as a coating agent for filtering materials, or a surface protective agent. Still further, it is useful for applications to impart water repellency by mixing it with polypropylene, nylon or the like, followed by shaping and forming into fibers.

The entire disclosure of Japanese Patent Application No. 2012-018469 filed on January 31, 2012 including specification, claims and summary is incorporated herein by reference in its entirety.

## Claims

1. A fluorinated copolymer comprising
units (A) derived from a macromonomer (a) which has, on average, at least two units (X) derived from a monomer (x) represented by the following formula (1),
units (B) derived from a monomer (b) which has no fluoroalkyl group and no cross-linkable functional group and of which the glass transition temperature, when formed into a homopolymer, is from 50 to 150°C, and
units (C) derived from a monomer (c) which has a cross-linkable functional group and no fluoroalkyl group, 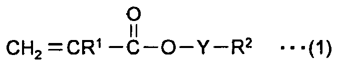 (in the formula (1), R¹ is a hydrogen atom, a methyl group or a halogen atom, Y is a C₁₋₄ bivalent aliphatic group, and R² is a C₁₋₆ linear or branched fluoroalkyl group).

2. The fluorinated copolymer according to Claim 1, wherein R¹ is a hydrogen atom or a methyl group, Y is a C₂₋₄ polymethylene group, and R² is a C₄₋₆ linear or branched perfluoroalkyl group.

3. The fluorinated copolymer according to Claim 1 or 2, wherein the monomer (x) is at least one member selected from the group consisting of 2-perfluorohexylethyl acrylate and 2-perfluorohexylyethyl methacrylate.

4. The fluorinated copolymer according to any one of Claims 1 to 3, wherein the monomer (b) is an alkyl (meth)acrylate wherein the alkyl group has from 1 to 4 carbon atoms.

5. The fluorinated copolymer according to Claim 4, wherein the monomer (b) is at least one member selected from the group consisting of methyl methacrylate, isobutyl methacrylate and t-butyl methacrylate.

6. The fluorinated copolymer according to any one of Claims 1 to 5, wherein the monomer (c) is a monomer having a cross-linkable functional group selected from a hydroxy group, a blocked isocyanate group, an amino group and an epoxy group.

7. The fluorinated copolymer according to Claim 6, wherein the monomer (c) is at least one member selected from the group consisting of 2-hydroxyethyl (meth)acrylate, diethylaminoethyl (meth)acrylate and a 3,5-dimethylpyrazole adduct of 2-isocyanate ethyl (meth)acrylate.

8. The fluorinated copolymer according to any one of Claims 1 to 7, wherein the polymerization degree of the monomer (x) in the macromonomer (a) is from 2 to 50.

9. A water/oil repellent composition comprising the fluorinated copolymer as defined in any one of Claims 1 to 8 and a medium.

10. The water/oil repellent composition according to Claim 9, wherein the medium is an aqueous medium or an organic solvent.

11. The water/oil repellent composition according to Claim 9 or 10, wherein the content of the fluorinated copolymer is from 20 to 40 mass% in the water/oil repellent composition (100 mass%).

12. A method for imparting water/oil repellency to an article, which comprises treating the article with the water/oil repellent composition as defined in Claim 9 or 10 wherein the content of the fluorinated copolymer is from 0.2 to 5 mass% in the water/oil repellent composition (100 mass%).

13. A process for producing the fluorinated copolymer as defined in any one of Claims 1 to 8, which comprises polymerizing, in the presence of a chain transfer agent and a polymerization initiator, a monomer (x) in a proportion of at least 2 times by mol to the chain transfer agent to produce a macromonomer precursor, introducing a polymerizable group to the macromonomer precursor to produce the macromonomer (a), and then, copolymerizing the obtained macromonomer (a) with the monomer (b) and the monomer (c) to obtain the fluorinated copolymer.

14. The process for producing the fluorinated copolymer according to Claim 13, wherein the chain transfer agent is a mercaptan having a reactive group, and a compound having a polymerizable group and a functional group reactive with the reactive group is reacted with the macromonomer precursor to produce the macromonomer (a).

15. The process for producing the fluorinated copolymer according to Claim 13 or 14, wherein the chain transfer agent is a mercaptan having a hydroxy group, and (meth)acrylic acid chloride is reacted with the macromonomer precursor to produce the macromonomer (a).
